# EUROPÄISCHE PATENTSCHRIFT

(11) **EP 1 592 584 B1**
(45) Veröffentlichungstag und Bekanntmachung des Hinweises auf die Patenterteilung: **28.02.2007**
(21) Anmeldenummer: 04704997.8
(22) Anmeldetag: 24.01.2004
(51) Int. Cl.: B60R 21/01

(54) **VERFAHREN ZUR VOREINSTELLUNG EINES INSASSENSCHUTZSYSTEMS EINES FAHRZEUGS**
METHOD FOR PRE-SETTING A PASSENGER PROTECTION SYSTEM OF A VEHICLE
PROCEDE POUR PREREGLER UN SYSTEME DE PROTECTION DES OCCUPANTS D'UN VEHICULE

(30) Priorität: 14.02.2003 DE 1306159
(43) Veröffentlichungstag der Anmeldung: 09.11.2005
(73) Patentinhaber: DaimlerChrysler AG, 70567 Stuttgart (DE)
(72) Erfinder: BACHMANN, Roland, 71065 Sindelfingen (DE); BAUMANN, Karl-Heinz, 71149 Bondorf (DE); JUSTEN, Rainer, 71155 Altdorf (DE); SCHÖNEBURG, Rodolfo, 72379 Hechingen (DE)
(86) Internationale Anmeldenummer: PCT/EP2004/000589
(87) Internationale Veröffentlichungsnummer: WO 2004/071816

(56) Entgegenhaltungen:
- WO-A-99/01315
- DE-A- 3 200 749
- DE-A- 4 112 579
- DE-A- 19 840 955
- US-A1- 2002 089 157
- US-B1- 6 198 996

## Beschreibung

Die Erfindung betrifft ein Verfahren zur Voreinstellung eines Insassenschutzsystems eines Fahrzeugs gemäß dem Oberbegriff des Anspruch 1 und ein Insassenschutzsystem nach Anspruch 8, welches zur Durchführung eines solchen Verfahrens geeignet ist.

Ein Verfahren gemäß dem Oberbegriff des Anspruch 1 ist aus der DE 41 12579 A1 bekannt. Das Insassenschutzsystem umfasst adaptive Schutzsystemkomponenten wie Sicherheitsgurt, Airbag, Kniepolster und verschiebbaren Sitz. Mittels eines Fahrzeuginsassenverhaltensimulationsprogramms wird das Verhalten eines Fahrzeuginsassen simuliert für den Fall, dass eine Stoßbelastung auf das Fahrzeug einwirkt. Daraus werden die Parameter gewonnen, um die Schutzsystemkomponenten so anzusteuern, dass die Belastung auf den Insassen möglichst gering ausfällt. Bei der Simulation werden unterschiedliche Daten benötigt: gemessene Fahrzeugkollisionsdaten und zuvor werkseitig abgespeicherte Fahrzeugdaten sowie gemessene Insassenpositionsdaten und spezifischen Insassendaten wie z.B. Geschlecht, Alter, Gewicht, Größe, Prozentanteil usw., welche vor Fahrtantritt mittels einer Dateneingabeeinrichtung eingegeben werden. Die Dateneingabe kann manuell erfolgen oder mittels eines Kartenlesers, welcher eine personenbezogene Datenkarte mit den spezifischen Insassendaten liest. Bei Verwendung einer Datenkarte können umfassende biometrische Daten an den Rechner übergeben werden, welche zuvor bei physikalischen Untersuchungen ermittelt wurden, wie z.B. Länge, Gewicht, Schwerpunkt, Trägheitsmoment eines jeweiligen Körperteils des Fahrzeuginsassen und Verbindungscharakteristika, wie Winkel-Drehmoment-Charakteristik jedes Gelenkes des Fahrzeuginsassen. Mit diesen genauen Daten kann die Auslösung der Schutzsystemkomponenten noch besser an den Insassen angepasst werden.

Zwar ermöglicht die Einstellung des Insassenschutzsystems mittels Datenkarte ohne Weiteres eine Ausdehnung des Nutzerkreises eines Fahrzeugs. Die Anmelderin sieht es jedoch als nachteilig an, dass wenn das Fahrzeug fast ausschließlich durch einen sehr begrenzten Nutzerkreis, wie z.B. Familienangehörige benutzt wird, das Erfordernis, die Datenkarte ständig mitzuführen und bei jedem Fahrtantritt einzulesen, als lästig empfunden werden kann.

Aus dem Stand der Technik sind verschiedene Vorrichtungen zur automatischen Einstellung und Anpassung von verstell- und einstellbaren Fahrzeugsystemen bekannt, welche nicht sicherheitsrelevante Funktionen, nämlich Komfortfunktionen (Audio-Geräte, Klimatisierung, Sitz, Lenkrad, Instrumentenbeleuchtung ...)oder Fahrfunktionen (Automatgetriebe, Motor, Fahrwerk ...) betreffen.

So ist aus der DE 3200749 A1 eine Vorrichtung zur automatischen Einstellung und Anpassung von Hilfseinrichtungen im Kraftfahrzeug an die individuellen Bedürfnisse und Erfordernisse des Fahrers bekannt, bei der mittels einer benutzerbezogenen Codierung des zündschlüssels die Anpassung erfolgt. Die Einstellungen werden automatisch bei Betätigung des Zündschlüssels vorgenommen. Jede Person benötigt dazu einen individuell angepassten Zündschlüssel mit einem individuell angepassten Code. Bei den anzupassenden Hilfseinrichtungen handelt es sich um Komfortfunktionen (Audio-Geräte, Klimaanlage, Sitz, Lenkrad, Rückspiegel, Instrumentenbeleuchtung ...).

Aus der DE 19840955 A1 ist bekannt, die auf einen Benutzer bezogenen Fahrzeugkonfigurationsdaten zur Getriebeabstimmung, und Energiemanagement sowie die üblichen Komforteinstellungsdaten auf einer mitzuführenden Chip-Karte zu speichern, wobei zusätzlich auch Daten zur personenbezogenen Zugangs- bzw. Nutzungsberechtigung speicherbar sind. Es können Chip-Kartenlesegeräte an mehreren Stellen im Fahrzeug angeordnet sein, wobei vom Fahrerplatz aus sämtliche Einrichtungen konfigurierbar sind während von einem anderen Sitzplatz aus dies lediglich für die diesem Sitzplatz zugeordnete Einrichtungen der Fall ist. Diese Lösung ermöglicht einem großen Nutzerkreis eine erleichterte benutzerspezifische Einstellung des benutzten Fahrzeugs und ist insbesondere für Fuhrparks, Car-Sharing- oder Mietwagenkonzepte geeignet.

Aus der WO 99/01315 ist bekannt, dass zur benutzerspezifischen Einstellung eines Fahrzeugs mit verstellbaren oder einstellbaren Aggregaten, wie z.B. Motor, Getriebe, Fahrwerk, Sitz, Wegfahrsperre oder Klimaanlage zunächst die Identität des Fahrers festgestellt wird, vorgespeicherte benutzerspezifische Eigenschaften abgerufen und anhand der Identität und der benutzerspezifischen Eigenschaften eine entsprechende Einstellung der Fahrzeugssysteme vorgenommen wird. Die benutzerspezifischen Daten sind in einem fahrzeugfesten Systemspeicher abgelegt und werden durch ein geeignetes Identifizierungsmittel wie z.B. Sprache, Chip-Karte, nutzerbezogener Fahrzeugschlüssel, Eingabe einer persönlichen Identifikations-Nummer, Erkennung des Fingerabdruckes oder dergleichen aktiviert. Das in dieser Schrift dargestellte Verfahren dient ausschließlich der Anpassung des Fahrzeugs an die Bedürfnisse des Fahrers. Eine Anpassung des Fahrzeugs an die Insassen auf den anderen Sitzplätzen ist nicht vorgesehen. An eine Anwendung auf die Anpassung von Insassenschutzsystemen ist auch nicht gedacht.

Aufgabe der Erfindung ist es, ein Insassenschutzsystem bereitzustellen, welches eine einfache und zuverlässige Anpassung an die Insassen eines Fahrzeugs erlaubt.

Diese Aufgabe wird durch ein Verfahren nach Anspruch 1 und ein Insassenschutzsystem für ein Fahrzeug nach Anspruch 8 gelöst.

Ein Vorteil der Erfindung besteht darin, dass das Insassenschutzsystem eines Fahrzeugs optimal an die individuellen physiologischen Eigenschaften der Insassen des Fahrzeugs angepasst werden kann, indem die sicherheitsrelevanten Daten (Sicherheitsprofil) von vorbestimmten Nutzer personifiziert im Fahrzeug hinterlegt sind und vermittels eines geeigneten Identifizierungsverfahrens abgerufen werden könne. Damit kann ein optimaler Schutz geboten werden z.B. für die Mitglieder einer Familie oder einer Fahrgemeinschaft, welche ein bestimmtes Fahrzeug regelmäßig nutzen. Auch wenn die Erfindung die Anpassung für alle Sitzplätze vorsieht, kann in einer einfachen Ausführung die Anpassung z.B. nur für den Fahrer vorgesehen sein.

Die Speicherung der personenbezogenen Daten im Fahrzeug und nicht z.B. auf einer mitzuführenden Chip-Karte hat den Vorteil, dass diese Daten im Fahrzeug gut geschützt vor Manipulation oder Falschanwendung sind. Die Weitergabe der Daten erfolgt nach korrekter Identifizierung nur innerhalb des Fahrzeugs zur Voreinstellung des Insassenschutzsystems. Zuverlässige Identifizierungseinrichtungen sind aus dem Stand der Technik wohlbekannt.

In einer vorteilhaften Weiterbildung werden einige der im Fahrzeug abgespeicherten Daten des Sicherheitsprofils, insbesondere biometrische Daten wie z.B. Körpergröße, Körperproportionen oder Körpergewicht gemäß eines vorbestimmten Zusammenhangs in Abhängigkeit des Lebensalters der identifizierten Person verändert. Damit kann z.B. bei Kindern und Jugendlichen das temporäre Anwachsen der biometrischen Daten aufgrund des körperlichen Wachstums z.B. mittels einer Wachstumskurve simuliert werden. Dies ermöglicht ein "Mitwachsen" des Sicherheitsprofils und kann die ansonsten notwendige manuelle Anpassung in kurzen z.B. jährlichen Abständen ersparen, sofern Toleranzgrenzen eingehalten werden. Auch kann von dem System ein Hinweis gegeben werden, wann es zweckmäßig erscheint, den Kindersitz für die nächste Altergruppe zu verwenden. Es kann auch bei Eingabe eins Handicaps, das nur zeitlich begrenzt vorhanden ist, eine automatische Anpassung erfolgen, so ist denkbar bei Eingabe des Beginns einer Schwangerschaft die Parameter der Schutzsystemkomponenten in den 9 Monaten der Schwangerschaft automatisch dem Schwangerschaftsverlauf anzupassen.

In einer weiteren vorteilhaften Weiterbildung werden die personenbezogenen Daten zur Information im Rettungsfall bereitgestellt. Dabei sind insbesondere biographische und medizinische Daten von Interesse.

Im Folgenden wird zunächst beschrieben, wie das im Fahrzeug abzulegende Sicherheitsprofil erstellt wird.

In einer persönlichen Sicherheitsberatung werden für die Personen, welche voraussichtlich als regelmäßige Fahrer oder Insassen des Fahrzeugs in Frage kommen, die personenbezogene Daten zur Erstellung des Sicherheitsprofils erhoben und für jede Person ein Sicherheitsprofil mit zunächst folgenden Daten erstellt:
- biometrische Daten wie Körpergröße, Körperproportionen, Körpergewicht (weitere biometrische Daten sind in DE 41 12579 A1 aufgeführt) und gegebenenfalls der verwendete Kindersitz
- biographische Daten wie Personalien, Geburtsdatum, Geschlecht und zu benachrichtigende Personen oder Organisationen
- medizinische Daten wie Gesundheitszustand, Krankheiten, Gebrechen, Schwangerschaft, Blutgruppe, Allergien, Implantate, Medikamente
- Identifizierungsdaten wie Name, Passwort, Fingerprint, Sprachprobe, Bild, ...

Die biometrischen Daten dienen vor allem der individuellen Adaption des Insassenschutzsystems während die biographischen Daten bei einem Unfall an eine Rettungsleitstelle weitergeleitet werden sollen. Die Identifizierungsdaten dienen der sicheren Identifizierung eines Insassen und sollen die zuverlässige Zuordnung der abgelegten Sicherheitsprofile zu den Insassen sicherstellen. Da die Identifizierungsdaten ebenfalls personenbezogen sind, können sie in den Datensatz des personenbezogenen Sicherheitsprofils einbezogen werden.

Bei Fahrzeugen mit einem einfachen Insassenschutzsystem werden Schutzsystemkomponenten ausgelöst, wenn ein Aufprall sensoriell z.B. durch einen Beschleunigungssensor erfasst wird. Es gibt weiterentwickelte Insassenschutzsysteme, bei denen es zu einer Auslösung von bestimmten, nämlich reversiblen Schutzsystemkomponenten (reversibler Gurtstraffer, verfahrbarer Sitz) kommt, wenn es Anzeichen gibt, dass ein Unfall unmittelbar bevorsteht. Dies kann sensoriell z.B. aus Fahrerreaktionen, Fahrzeugverhalten oder mittels vorausschauende Umfeldbeobachtung abgeleitet werden. Bei einem solchen Insassenschutzsystem sind zusätzlich die für den Fall einer präventiven Auslösung erforderlichen individuellen Parameter anzugeben (PRE-SAFE-Positionen).

Typische adaptive Schutzsystemkomponenten und deren Parameter sind:
- Mehrstufiger Airbag mit einstellbarer Aufblascharakteristik für jede Airbagstufe, z.B. Füllverhalten, Abströmverhalten, Airbaggröße oder Volumenstrom des Gasgenerators
- Sicherheitsgurt mit einstellbarem Kraftniveau und Kraftverlauf der Gurtkraftbegrenzung und einstellbarem Kraftniveau des Gurtstraffers oder bei zweistufigem Gurtstraffer mit einstellbaren Kraftniveaus für beide Stufen (z.B. reversible ersten Stufe und pyrotechnische zweite Stufe)
- Sitz, welcher präventiv in eine optimal schutzwirksame Sitzposition (PRE-SAFE-Position) verfahrbar ist, mit einstellbarer Kopfstützenposition, Lehnenneigung, Längsverstellung, Sitzhöhe oder Sitzneigung
- Polsterkomponenten im Innenraum, die in ihrer Charakteristik (Steifigkeit oder verschiebbarer Weg) individuell a-daptierbar sind, z.B. ausfahrbarer Knieschutz
- Lenkung mit einstellbarem Kraftniveau einer Längsverschieblichkeit im Crashfall

Daneben können in dem Sicherheitsprofil auch insbesondere auf den Fahrer bezogene Parameter hinterlegt sein, deren optimale Einstellung die Fahrsicherheit im normalen Fahrbetrieb erhöhen wie z.B. die Einstellung der Innen- und Außenspiegel, des Sitzes, der Kopfstütze und der Gurthöhe. Grundsätzlich erlaubt die individuelle Adaption auch die Anpassung anderer sicherheitsrelevanter Größen z.B. im Bereich der Aktiven Sicherheit (Fahrwerksabstimmung, individuelle Auslöseparameter für ein elektronisches Stabilitätsprogramm oder Bremsassistent).

In einer einfachen Ausführungsform können anhand weniger biometrischer Daten aufgrund von Erfahrungswerten für jede Person die individuellen Parameter für die Anpassung des Insassenschutzsystems festgelegt werden, wobei zwischen den verschiedenen Sitzplätzen (Fahrerposition, Beifahrerposition, Fond) im Fahrzeug aber auch nach Auslösefall (präventiv oder durch Crash ausgelöst) zu unterscheiden ist. In dieser Weise werden die optimalen personenbezogenen Parameter zur Einstellung von einem Sitzplatz zugeordneten Schutzsystemkomponenten ermittelt. Diese individuellen Parameter werden dem Sicherheitsprofil hinzugefügt, an den fahrzeugseitigen Speicher übergeben und dort personenbezogen abgespeichert.

In einer anderen Ausgestaltung werden aus den biometrischen Daten und weiterer, auf das Fahrzeug bezogenen Daten mittels eines Simulationsprogramms, wie es in der DE 41 12 579 A1 angeführt ist, die optimalen Parameter zur Einstellung der Schutzsystemkomponente bezogen auf einen Sitzplatz ermittelt, wobei die Parameter zusätzlich hinsichtlich typischer Unfallsituationen unterschieden sein können.

Die Simulation kann in einem Rechner außerhalb des Fahrzeugs, z.B. beim Fahrzeughersteller oder im Rahmen der Sicherheitsberatung durchgeführt werden. Dann wird mittels der Angaben für die zugeordnete Person und jeden in Frage kommenden Sitzplatz im Fahrzeug die Simulation für typische Unfallsituationen durchgeführt, wobei die optimalen Parameter zur Einstellung der auf den jeweiligen Sitzplatz bezogenen Schutzsystemkomponenten ermittelt werden. Diese Parameter werden dem Sicherheitsprofil hinzugefügt und personenbezogen an den fahrzeugseitigen Speicher übergeben und dort abgespeichert, wobei auch hier zwischen typischen Gefahren- oder Unfallsituationen unterschieden werden kann.

Alternativ kann die Simulation auf in einem Rechner im Fahrzeug erfolgen. Bei ausreichender Rechenleistung könnte die Simulation und Ermittlung der optimalen Parameter auch im Vorfeld oder während des Unfallgeschehens erfolgen, was den Vorteil hätte, dass das Insassenschutzsystem noch besser an das Unfallgeschehen angepasst werden könnte. Beispielsweise, könnte die aktuelle Sitzposition des Insassen oder die Kollisionsparameter in die Simulation eingehen.

Wie die Adaption der Schutzsystemkomponenten in Abhängigkeit eines Sicherheitsprofils in sinnvoller Weise erfolgen kann, wird exemplarisch anhand einiger Beispiele erläutert:
- Es wird die Rückzugskraft des reversiblen Gurtstraffers und des pyrotechnischen Straffers an Alter, Geschlecht und Insassenmasse angepasst.
- Die Kraft und der Kraftverlauf des Gurtkraftbegrenzers über der Auszugslänge werden an Alter, Geschlecht und Insassenmasse angepasst.
- In Sonderfällen wie Schwangerschaft, kann automatisch die Strafferkraft, das Kraftbegrenzerniveau, der Airbagfüllgrad, die Sitzeinstellung und die Gurthöhenverstellung mit dem Schwangerschaftsverlauf angepasst werden.
- Bei Kindern wird über die Automatische Kindersitzerkennung (AKSE) der Kindersitz erkannt und in Verbindung mit individuellen Daten die optimale Rückhaltefunktion eingestellt, die sich mit zunehmendem Alter des Kindes automatisch verändert. Wächst das Kind aus dem aktuellen Kindersitz heraus, wird der Fahrer darauf aufmerksam gemacht.
- Die Sitze, Kopfstützen, Gurthöhenversteller an der B-Säule werden abhängig von Größe und Proportion der Insassen eingestellt.
- Der Füllungsgrad und das Abströmverhalten der Airbags werden von der jeweiligen Insassenmasse abhängig gesteuert.
- Strafffunktion, Gurtkraftbegrenzung werden abhängig vom Alter eines Kindes und abhängig vom verwendeten Kindersitz automatisch eingestellt.
- Die Kennlinie von aktiven Schutzpolstern wird z.B. an Insassengröße und -gewicht angepasst.

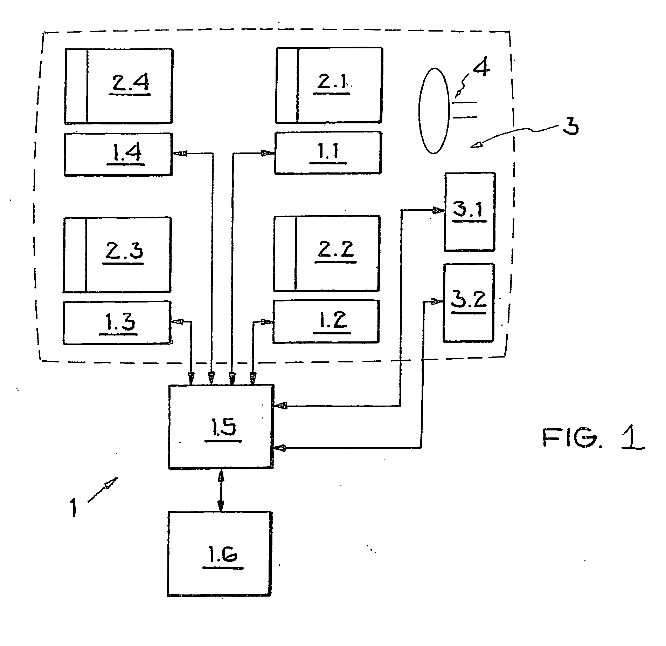

Im Folgenden wird anhand der einzigen Figur das erfindungsgemäße Verfahren und Insassenschutzsystem erläutert.

Die Figur zeigt innerhalb der gestrichelten Umrandung eine Aufsicht eines Fahrzeuginnenraumes mit vier Sitzplätzen 2.1 - 2.4, wobei vor dem Fahrersitzplatz 2.1 ein Lenkrad 4 angedeutet ist. Jedem der Sitzplätze 2.1 - 2.4 ist eine der adaptiven Schutzsystemkomponente 1.1 - 1.4 eines Insassenschutzsystem 1 zugeordnet. Das Insassenschutzsystem 1 umfasst weiterhin eine Zentraleinheit 1.5 mit einem fahrzeugfesten Speicher 1.6 zur Ablage von personenbezogenen Sicherheitsprofilen und eine Personenidentifizierungseinheit 3, welche ebenfalls vom Fahrzeuginnenraum aus bedienbar ist und hier als Bildschirm mit Eingabetasten 3.1 ausgebildet ist. Ergänzend oder alternativ kann zur Personenidentifizierung eine Sprach-Kommunikationseinrichtung 3.2 vorgesehen sein, welche über Möglichkeiten der Sprachausgabe und Spracheingabe verfügt. Viele andere, ebenfalls geeignete Personenidentifizierungseinrichtungen 3 sind bekannt und eingangs aufgeführt worden. Anstelle der direkten Eingabe der Namen sind auch Systeme denkbar, welche durch Vergleich mit gespeicherten akustischen Sprachmustern, Fingerabdruckerkennung oder Bilderkennung eine Identifizierung ermöglichen. Eine Kombination von Identifizierungsmethoden ist auch denkbar, um Unschärfen der jeweiligen Systeme durch Plausibilisierungen aufzufangen. Plausibilisierungen sind auch möglich durch Analyse von Fahrstil und Komforteinstellungen, wie z.B. Sitzeinstellungen, Radiosenderwahl, Klimaeinstellung, oder durch Vergleich mit hinterlegten Fahrberechtigungen.

### Erfindungsgemäß läuft im Fahrzeug das folgende Verfahren ab:

In einem ersten Schritt werden mittels der Personenidentifizierungseinrichtung 3 für jeden Sitzplatz 2.1 - 2.4 die Identität der den Sitzplatz belegenden Person ermittelt. Dabei werden mit der Personenidentifizierungseinrichtung 3 aufgenommene Identifikationsmerkmale einer Person mit den Identifizierungsdaten der abgelegten Sicherheitsprofile verglichen und bei Übereinstimmung mit den Identifizierungsdaten eines Sicherheitsprofils die entsprechende Person als Insasse identifiziert und das zugehörige Sicherheitsprofil zur Voreinstellung des Insassenschutzsystems aufgerufen. Kann die Identität nicht ermittelt werden, so wird auch dieses festgehalten.

In einer bevorzugten Ausführungsform erfolgt die Identifizierung und Sitzplatzzuordnung durch eine Steuereinheit 1.5, welche zusammen mit der Personenidentifizierungseinheit 3 in einem Dialog mit den Insassen für jeden Sitzplatz 2.1 - 2.4 den Namen der den Sitz belegenden Person abfragt. Der Dialog kann mittels Sprachausgabe und Spracheingabe einer Sprachkommunikationseinrichtung 3.2 oder mittels Bildschirm und Tastatur 3.1 erfolgen.

In einem zweiten Schritt wird für jede identifizierte Person das zugeordnete abgespeicherte Sicherheitsprofil aus einem Speicher 1.6 abgerufen und anhand des Sicherheitsprofils die dem Sitzplatz 2.1 - 2.4 zugeordnete Schutzsystemkomponenten 1.1 - 1.4 eingestellt. Wenn für einen belegten Sitzplatz keine Person mit einem hinterlegten Sicherheitsprofil identifiziert werden konnte, wird die zugeordnete Schutzsystemkomponente entsprechend Standardwerten voreingestellt, welche ein bestmögliches Sicherheitsniveau sicherstellen. Alternativ kann vorgesehen sein, dass wenn für einen belegten Sitzplatz keine Person mit einem hinterlegten Sicherheitsprofil identifiziert werden konnte, die Steuereinheit 1.5 in einem Dialog mit dem Insassen einige biometrische Parameter, z.B. Größe und Gewicht abfragt, aus denen geeignete Parameter zur Einstellung des Insassenschutzsystems 1 hergeleitet werden.

In einer vorteilhaften Weiterbildung ist vorgesehen, dass nach einem Unfall die personenbezogenen Daten von identifizierten Insassen für die Zwecke der Bergung und/oder Erstversorgung bereitgestellt werden, z.B. durch funktechnische Übertragung an eine Rettungszentrale. Zusätzlich kann die Information über die Sitzplätze aller Insassen oder ausgelösten Schutzsystemkomponenten bereitgestellt werden.

## Patentansprüche

1. Verfahren zur Voreinstellung eines Insassenschutzsystems eines Fahrzeugs, welches mehrere, jeweils einem Sitzplatz im Fahrzeug zugeordnete adaptive Schutzsystemkomponenten umfasst und mittels auf den Insassen bezogener Daten voreingestellt wird,
**dadurch gekennzeichnet,**
**dass** für mindestens einen Sitzplatz (2.1 - 2.4) die Identität des den Sitzplatz belegenden Insassen ermittelt und ein der identifizierten Person zugeordnetes, in einem fahrzeugfesten Speicher (1.6) abgespeichertes Sicherheitsprofil abgerufen und anhand des Sicherheitsprofils die dem Sitzplatz zugeordnete Schutzsystemkomponenten (1.1 - 1.4) eingestellt werden.

2. Verfahren zur Voreinstellung eines Insassenschutzsystems eines Fahrzeugs nach Anspruch 1,
**dadurch gekennzeichnet,**
**dass** wenn die Identität des den Sitzplatz (2.1 - 2.4) belegenden Insassen nicht feststellbar ist, die dem Sitzplatz zugeordneten Schutzsystemkomponenten (1.1 - 1.4) gemäß Standardeinstellungen voreingestellt werden.

3. Verfahren zur Voreinstellung eines Insassenschutzsystems eines Fahrzeugs nach Anspruch 1,
**dadurch gekennzeichnet,**
**dass** wenn die Identität des den Sitzplatz (2.1 - 2.4) belegenden Insassen nicht feststellbar ist, in einem Dialog mit dem Insassen einige biometrische Parameter, z.B. Größe und Gewicht abfragt werden, aus denen geeignete Parameter zur Einstellung der dem Sitzplatz zugeordneten Schutzsystemkomponenten (1.1 - 1.4) bestimmt werden.

4. Verfahren zur Voreinstellung eines Insassenschutzsystems eines Fahrzeugs nach Anspruch 1,
**dadurch gekennzeichnet,**
**dass** einige der im Speicher (1.6) Fahrzeug abgespeicherten Daten des Sicherheitsprofils gemäß eines vorbestimmten Zusammenhangs mit der Zeit veränderlich sind.

5. Verfahren zur Voreinstellung eines Insassenschutzsystems eines Fahrzeugs nach Anspruch 1,
**dadurch gekennzeichnet,**
**dass** die zeitlich veränderlichen Daten biometrische Daten wie z.B. Körpergröße, Körperproportionen oder Körpergewicht sind, welche in Abhängigkeit einer dem Lebensalter entsprechenden Zeitvariable gemäß eines vorbestimmten Zusammenhangs anwachsen.

6. Verfahren zur Voreinstellung eines Insassenschutzsystems eines Fahrzeugs nach Anspruch 1,
**dadurch gekennzeichnet,**
**dass** nach einem Unfall die personenbezogenen Daten von identifizierten Insassen für die Zwecke der Bergung und/oder Erstversorgung bereitgestellt werden.

7. Verfahren zur Voreinstellung eines Insassenschutzsystems eines Fahrzeugs nach Anspruch 6,
**dadurch gekennzeichnet,**
**dass** zusätzlich die Information über die Sitzplätze aller Insassen und/oder die ausgelösten Schutzsystemkomponenten bereitgestellt wird.

8. Insassenschutzsystem für ein Fahrzeug zur Durchführung des Verfahrens nach einem der vorangehenden Ansprüche, welches mehrere, jeweils einem Sitzplatz im Fahrzeug zugeordnete adaptive Schutzsystemkomponenten umfasst und mittels auf den Insassen bezogener Daten voreinstellbar ist,
**dadurch gekennzeichnet,**
**dass** das Insassenschutzsystem (1) eine Personenidentifizierungseinrichtung (3) und einen Speicher (1.6) zur Ablage von personenbezogenen Sicherheitsprofilen aufweist, so dass ein einer identifizierten Person zugeordnetes Sicherheitsprofil abrufbar und zur Voreinstellung des Insassenschutzsystems (1) herangezogen werden kann.

## Claims

1. A method for presetting a vehicle occupant protection system of a vehicle which comprises a plurality of adaptive protection system components which are each assigned to a seat in the vehicle, and which method is preset by means of data relating to the vehicle occupant, **characterized in that** the identity of the vehicle occupant occupying the seat is determined for at least one seat (2.1 - 2.4) and a safety profile which is assigned to the identified person and is stored in a memory (1.6) which is mounted in the vehicle is called and the protection system components (1.1 -1.4) which are assigned to the seat are set using the safety profile.

2. The method for presetting a vehicle occupant protection system of a vehicle as claimed in claim 1, **characterized in that**, if the identity of the vehicle occupant occupying the seat (2.1 - 2.4) cannot be determined, the protection system components (1.1 - 1.4) which are assigned to the seat are preset according to standard settings.

3. The method for presetting a vehicle occupant protection system of a vehicle as claimed in claim 1, **characterized in that**, if the identity of the vehicle occupant occupying the seat (2.1 - 2.4) cannot be determined, a number of biometric parameters, for example size and weight, are interrogated in a dialog with the vehicle occupant and suitable parameters for setting the protection system components (1.1 - 1.4) which are assigned to the seat are determined from said biometric parameters.

4. The method for presetting a vehicle occupant protection system of a vehicle as claimed in claim 1, **characterized in that** a number of the data items of the safety profile which are stored in the memory (1.6) vehicle can be varied over time according to a predetermined relationship.

5. The method for presetting a vehicle occupant protection system of a vehicle as claimed in claim 1, **characterized in that** the data which varies over time is biometric data, for example body size, body proportions or body weight, which increase according to a predetermined relationship as a function of a time variable corresponding to the age of said person.

6. The method for presetting a vehicle occupant protection system of a vehicle as claimed in claim 1, **characterized in that** after an accident the person-related data of identified vehicle occupants is made available for the purpose of recovery and/or first aid.

7. The method for presetting a vehicle occupant protection system of a vehicle as claimed in claim 6, **characterized in that** in addition the information about the seats of all the vehicle occupants and/or the triggered protection system components is made available.

8. A vehicle occupant protection system for a vehicle for carrying out the method as claimed in one of the preceding claims, which comprises a plurality of adaptive protection system components which are each assigned to a seat in the vehicle, and which system can be preset by means of data relating to the vehicle occupant, **characterized in that** vehicle occupant protection system (1) has a person identification device (3) and a memory (1.6) for storing person-related safety profiles so that a safety profile which is assigned to an identified person can be called and can be used to preset the vehicle occupant protection system (1).

## Revendications

1. Procédé pour prérégler un système de protection des passagers d'un véhicule, qui comprend plusieurs composants du système de protection adaptatifs, attribués chacun à une place assise dans le véhicule, et est préréglé au moyen de données spécifiques au passager,
**caractérisé en ce que**
l'identité du passager occupant la place assise est déterminée pour au moins une place assise (2.1 - 2.4) et un profil de sécurité, attribué à la personne identifiée et mémorisé dans une mémoire (1.6) solidaire du véhicule, est appelé et les composants du système de protection (1.1 - 1.4) attribués à la place assise sont réglés à l'aide du profil de sécurité.

2. Procédé pour le préréglage d'un système de protection des passagers d'un véhicule selon la revendication 1,
**caractérisé en ce que**,
si l'identité du passager occupant la place assise (2.1 - 2.4) ne peut pas être déterminée, les composants du système de protection (1.1 - 1.4) attribués à la place assise sont préréglés selon des réglages standard.

3. Procédé pour le préréglage d'un système de protection des passagers d'un véhicule selon la revendication 1,
**caractérisé en ce que**,
si l'identité du passager occupant la place assise (2.1 - 2.4) ne peut pas être déterminée, quelques paramètres biométriques, par exemple la taille et le poids, sont interrogés dans le cas d'un dialogue avec le passager, à partir desquels des paramètres appropriés sont déterminés pour le réglage des composants du système de protection (1.1 - 1.4) attribués à la place assise.

4. Procédé pour prérégler un système de protection des passagers d'un véhicule selon la revendication 1,
**caractérisé en ce que**
certaines des données, stockées dans la mémoire (1.6) du véhicule, du profil de sécurité sont modifiables avec le temps selon un rapport prédéfini.

5. Procédé pour prérégler un système de protection des passagers d'un véhicule selon la revendication 1,
**caractérisé en ce que**
les données variables dans le temps sont des données biométriques comme par exemple la taille, les proportions du corps ou le poids du corps, qui augmentent en fonction d'une variable de temps correspondant à l'âge de vie selon un rapport prédéfini.

6. Procédé pour prérégler un système de protection des passagers d'un véhicule selon la revendication 1,
**caractérisé en ce que**,
après un accident, les données spécifiques à la personne de passagers identifiés sont mises à disposition pour les besoins du sauvetage et/ou des premiers soins à prodiguer.

7. Procédé pour prérégler un système de protection des passagers d'un véhicule selon la revendication 6,
**caractérisé en ce que**
en supplément l'information concernant les places assises de tous les passagers et/ou les composants déclenchés du système de protection est mise à disposition.

8. Système de protection des passagers pour un véhicule pour la mise en oeuvre du procédé selon l'une quelconque des revendications précédentes, lequel comprend plusieurs composants du système de protection adaptatifs et attribués chacun à une place assise dans le véhicule et peut être préréglé au moyen de données spécifiques au passager,
**caractérisé en ce que**
le système de protection des passagers (1) présente un dispositif d'identification de personne (3) et une mémoire (1.6) pour le dépôt de profils de sécurité spécifiques aux personnes, de sorte qu'un profil de sécurité attribué à une personne identifiée peut être appelé et utilisé pour le préréglage du système de protection des passagers (1).
